# EUROPÄISCHE PATENTSCHRIFT

(11) **EP 0 861 366 B1**
(45) Veröffentlichungstag und Bekanntmachung des Hinweises auf die Patenterteilung: **06.03.2002**
(21) Anmeldenummer: 96945707.6
(22) Anmeldetag: 05.11.1996
(51) Int. Cl.: F01K 13/02

(54) **VERFAHREN UND VORRICHTUNG ZUR SCHNELLEN LEISTUNGSREGELUNG EINER KRAFTWERKSANLAGE**
METHOD AND DEVICE FOR RAPID OUTPUT ADJUSTMENT OF A POWER-GENERATING FACILITY
PROCEDE ET DISPOSITIF POUR LA REGULATION RAPIDE DE LA PRODUCTION D'UNE CENTRALE ELECTRIQUE

(30) Priorität: 14.11.1995 DE 19542433
(43) Veröffentlichungstag der Anmeldung: 02.09.1998
(73) Patentinhaber: SIEMENS AKTIENGESELLSCHAFT, 80333 München (DE)
(72) Erfinder: ZAVISKA, Oldrich, D-91058 Erlangen (DE); FRICKE, Christian, D-30989 Gehrden (DE); FURUMOTO, Herbert, D-91052 Erlangen (DE)
(86) Internationale Anmeldenummer: DE9602106
(87) Internationale Veröffentlichungsnummer: WO9718385

(56) Entgegenhaltungen:
- DE-A- 4 344 118
- PROCEEDINGS OF THE CONFERENCE ON FUZZY SYSTEMS, ORLANDO, JUNE 26 - 29, 1994, Bd. 1, 26.Juni 1994, INSTITUTE OF ELECTRICAL AND ELECTRONICS ENGINEERS, Seiten 667-672, XP000529331 MARCELLE K A W ET AL: "OPTIMAL LOAD CYCLING OF LARGE STEAM TURBINES"

## Beschreibung

Die Erfindung bezieht sich auf ein Verfahren zur schnellen Leistungsregelung einer Kraftwerksanlage mit einem eine Dampfturbine und einen Generator aufweisenden Turbosatz, wobei zur Einstellung einer Generatormehrleistung im Anlagenprozeß vorhandene Energiespeicher aktiviert werden. Sie bezieht sich weiter auf eine Vorrichtung zur Durchführung des Verfahrens.

Eine sichere Energieversorgung in einem elektrischen Energieversorgungssystem setzt eine sorgfältige Abstimmung zwischen der Erzeugung elektrischer Energie durch eine Anzahl von Kraftwerksblöcken und der Abnahme dieser Energie durch eine Anzahl von Verbrauchern in einem elektrischen Verteilungsnetz voraus. Sind Erzeugung und Abnahme der elektrischen Energie gleich groß, so ist die Netzfrequenz, die eine wesentliche Kenngröße in einem elektrischen Netz ist, konstant. Ihr Nennwert beträgt z.B. im europäischen Verbundnetz 50Hz. Eine Frequenzabweichung, die z.B. durch den Ausfall eines Kraftwerksblocks und durch Zu- oder Abschalten eines Verbrauchers auftritt, kann als Maß für eine Erhöhung bzw. Absenkung der Erzeugerleistung betrachtet werden. Neben einer Ausregelung von Frequenzabweichungen innerhalb eines Energieversorgungssystems besteht nun eine weitere Aufgabe darin, eine vorgegebene Übergabeleistung an Kuppelstellen zu Teilnetzen, aus denen sich das Verteilungsnetz (Verbundnetz oder Inselnetz) zusammensetzt, einzuhalten. Eine Forderung besteht daher darin, daß eine schnelle Leistungserhöhung eines Kraftwerksblocks innerhalb von Sekunden verfügbar ist.

Möglichkeiten zur schnellen Leistungsregelung und Frequenzstützung sind in der Druckschrift "VGB Kraftwerkstechnik", Heft 1, Januar 1980, Seiten 18 bis 23, beschrieben. Während für eine schnelle Leistungsänderung im Bereich von Sekunden (Sekundenreserve) mehrere gleichzeitig oder alternativ durchführbare Eingriffsmöglichkeiten bestehen, ist für eine verbleibende Veränderung der Leistung eines Kraftwerksblocks eine Änderung der Brennstoffzufuhr erforderlich. In einem fossil befeuerten Kraftwerk werden daher zur Überbrückung von Verzugszeiten innerhalb der ersten Sekunden zuvor in gedrosselter Stellung gehaltene Stellventile der Dampfturbine geöffnet und dadurch verfügbare Dampfspeicher praktisch ohne Verzögerung aktiviert und entladen.

Neben einer Leistungserhöhung durch die Aufhebung der Androsslung von Stellventilen der Dampfturbine werden auch im Wasser-Dampf-Kreislauf der Dampfturbine vorgesehene Vorwärmer, die mittels Anzapfdampf aus der Dampfturbine beheizt werden, abgeschaltet. Ein gleichzeitig durch die Niederdruckvorwärmer geführter Kondensatorstrom kann innerhalb weniger Sekunden gestoppt und wieder erhöht werden. Diese Maßnahme zur schnellen Leistungsregelung in fossil befeuerten Kraftwerksblöcken durch Abschaltung der Vorwärmer mit Kondensatstop ist z.B. auch in der Deutschen Patentschrift DE-PS 33 04 292 beschrieben.

Zur Regelung und/oder Steuerung der schnellen Sekundenreserve, d.h. einer geregelten Beanspruchung von Dampfströmen zu Regenerativvorwärmern und/oder Heizkondensatoren sowie des Prozeßdampfes und des Kondensats im Wasser-Dampf-Kreislauf der Dampfturbine eines Kraftwerksblocks, wird daher üblicherweise eine Regeleinrichtung eingesetzt. Diese bewirkt für eine schnelle Leistungsregelung, d.h. zur Aktivierung der Sekundenreserve, eine Drosselung der Dampfzufuhr zu Vorwärmern, eine Drosselung des Prozeßdampfes und/oder eine Drosselung des Kondensats. Dabei werden Stellungs-Sollwerte für Regelventile in Turbinenanzapfungen und für Stellorgane zur Kondensateinstellung derart gebildet, daß eine geforderte Generatormehrleistung erreicht wird. Nachteilig dabei ist jedoch, daß die Koordinierung der geforderten Leistungsanderungs-Geschwindigkeit und der Leistungsamplitute mit anderen Prozeßgrößen, insbesondere mit Temperaturänderungen in Vorwärmstraßen und/oder Heizkondensatoren sowie mit einer Nebenkondensatförderung, außerordentlich schwierig ist. Darüberhinaus sind die Prioritäten der Inanspruchnahme der einzelnen Maßnahmen zur schnellen Leistungsregelung nicht berücksichtigt. Außerdem ist aufgrund der üblicherweise nicht linearen Regelstrecke die Regelgüte bisher nicht besonders hoch.

Der Erfindung liegt daher die Aufgabe zugrunde, ein Verfahren zur schnellen Leistungsbereitstellung in einer Kraftwerksanlage anzugeben, mit dem eine besonders wirkungsvolle Regelung erreicht wird. Dies soll bei einer zur Durchführung des Verfahrens besonders geeigneten Vorrichtung mit einfachen Mitteln erzielt werden.

Bezüglich des Verfahrens wird diese Aufgabe erfindungsgemäß dadurch gelöst, daß zur geregelten Aktivierung der Energiespeicher Fuzzy-Logik eingesetzt wird, wobei Fuzzy-Regeln aus den Anlagenerfahrungen verwendet werden, und wobei anhand der Generator-Mehrleistung und anhand der Energiesituation der aktivierbaren Speicher der Aktivierungsgrad der einzelnen Enrgeispiecher ermittelt wird.

Die Erfindung geht dabei von der Überlegung aus, eine Vielzahl von Prozeßwerten oder Prozeßgrößen des Anlagenprozesses auszuwerten. Dabei soll eine Analyse der für den zu regelnden Prozeß relevanten Prozeßgrößen in deren Gesamtheit durchgeführt werden. Mittels Fuzzy-Logik können dann Anlagenerfahrungen (Expertenwissen) in die Auswertung eingebracht und bei der folgenden Bildung von Stellungs-Sollwerten berücksichtigt werden.

In vorteilhafter Weiterbildung wird zur Realisierung der dazu erforderlichen Fuzzy-Regeln die Priorität der Inanspruchnahme der einzelnen Energiespeicher berücksichtigt. Außerdem werden vorteilhafterweise bei einer Auswertung von Prozeßgrößen oder Prozeßdaten zur Ermittlung von Stellungs-Sollwerten oder über deren Bereitschaft und/oder deren temporärer Begrenzung berücksichtigt.

Bezüglich der Vorrichtung wird die genannte Aufgabe erfindungsgemäß gelöst durch ein Fuzzy-System, dessen Eingänge die Generatormehrleistung sowie die Energiesituation der aktivierbaren Speicher beinhalten, und dessen Ausgänge den Aktivierungsgrad der einzelnen Energiespeicher angeben.

In vorteilhafter Ausgestaltung umfaßt das Fuzzy-System einen ersten Fuzzy-Regler, dessen Eingänge die Energiesituation der aktivierbaren Speicher beinhalten, und dessen Ausgang eine Einsatzstrategie für durchzuführende Maßnahmen sowie temporäre Begrenzungen der einzelnen aktivierbaren Speicher angibt. Vorzugsweise weist der erste Fuzzy-Regler zusätzlich einen Eingang für den Drosselgrad mindestens eines mit der Dampfturbine zuströmseitig verbundenen Stellorgans auf.

Zweckmäßigerweise umfaßt das Fuzzy-System weiter einen zweiten Fuzzy-Regler, dessen Eingänge den Leistungs-Sollwert und einen Mehrleistungs-Istwert des Generators sowie die Einsatzstrategie und die Begrenzungen beinhalten, und dessen Ausgänge Stellungs-Sollwerte für Dampf-Stellorgane angeben.

Das Fuzzy-System umfaßt ferner zweckmäßigerweise einen dritten Fuzzy-Regler, dessen Eingänge den Stellungs-Istwert mindestens eines Dampf-Stellorgans und den Temperatur- und/oder Druck-Istwert von im Wasser-Dampf-Kreislauf gespeichertem Speisewasser beinhalten, und dessen Ausgänge Stellungs-Sollwerte für Kondensat-Stellorgane angeben. Dabei beinhaltet vorzugsweise ein Eingang des dritten Fuzzy-Reglers einen Wert für die Klappenänderungsgeschwindigkeit mindestens eines Dampf-Stellorgans.

Das Fuzzy-System umfaßt zweckmäßigerweise außerdem einen vierten Fuzzy-Regler, dessen Eingang einen Istwert für das Niveau in mindestens einem in den Wasser-Dampf-Kreislauf geschalteten Zwischenspeicher beinhaltet, und dessen Ausgang einen Stellungs-Sollwert für die Ein- oder Ausspeicherung von Kondensat in einen Kondensatspeicher angibt.

Die mit der Erfindung erzielten Vorteile bestehen insbesondere darin, daß durch den Einsatz von Fuzzy-Logik unter Verwendung von Anlagenerfahrungen eine geregelte Aktivierung der im Anlagenprozeß vorhandenen Energiespeicher erreicht wird. Dabei können die Prioritäten der Inanspruchnahme einzelner Maßnahmen berücksichtigt werden. Außerdem ist eine schonende Fahrweise bei gleichzeitig besonders effektiver Nutzung vorhandener Energiespeicher gewährleistet. Insbesondere wird eine schnelle Leistungsregelung hoher Güte erzielt.

Ein Ausführungsbeispiel der Erfindung wird anhand einer Zeichnung näher erläutert. Darin zeigen:
- FIG 1: ein Blockschaltbild eines Turbogenerators als Prozeßabschnitt eines Kraftwerksblocks, und
- FIG 2: ein Blockschaltbild eines Fuzzy-Systems als Regelvorrichtung für den Prozeßabschnitt gemäß Figur 1.

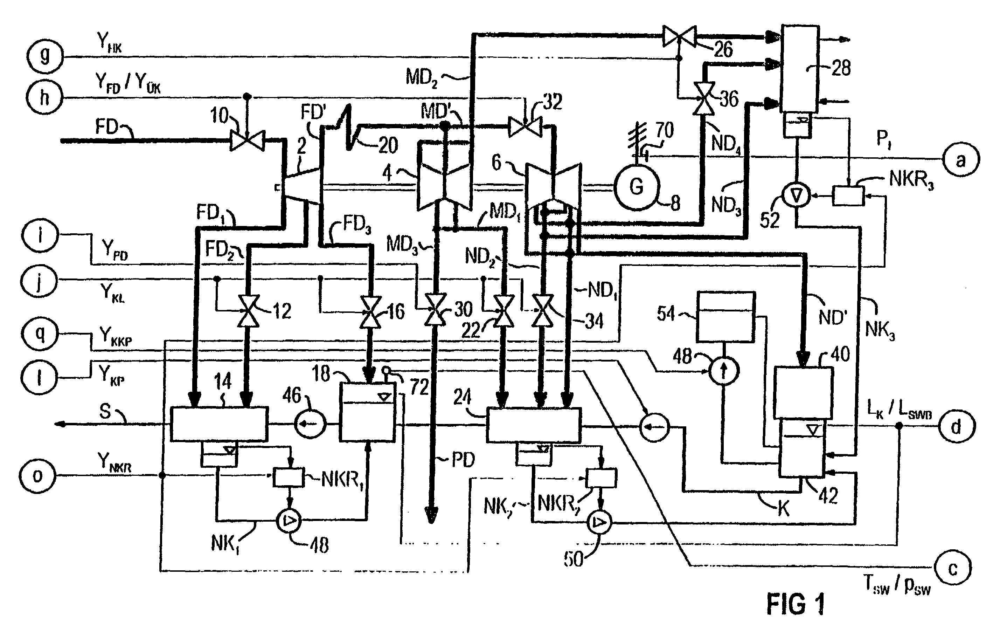

Figur 1 zeigt ein prinzipielles Blockschaltbild eines Prozeßabschnittes eines Kraftwerksblockes mit einem Turbosatz, der sich aus einer Hochdruck-Teilturbine 2, einer Mitteldruck-Teilturbine 4 und einer Niederdruck-Teilturbine 6 sowie einem Generator 8 zusammensetzt. Beim Betrieb des Turbosatzes wird Frischdampf FD über ein Frischdampf-Stellventil 10 in die Hochdruck-Teilturbine 2 eingeleitet. Ein erster Teilstrom FD₁ sowie ein mittels eines Stellventils 12 einstellbarer zweiter Teilstrom FD₂ wird der Hochdruck-Teilturbine 2 für eine Hochdruck-Vorwärmstraße 14 entnommen. Ein mittels eines weiteren Stellventils 16 einstellbarer dritter Teilstrom FD₃ wird der Hochdruck-Teilturbine 2 für einen Speisewasserbehälter 18 entnommen. Der Abdampf FD' aus der Hochdruck-Teilturbine 2 wird über einen Zwischenüberhitzer 20 der Mitteldruck-Teilturbine 2 zugeführt.

Aus der Mitteldruck-Teilturbine 2 erfolgt eine weitere Dampfentnahme. Dazu wird mittels eines Stellventils 22 ein einstellbarer erster Teilstrom MD₁ für eine Niederdruck-Vorwärmstraße 24 entnommen. Eine weitere Entnahme erfolgt über einen mittels eines Stellventils 26 einstellbaren zweiten Teilstroms MD₂ für einen Heizkondensator 28. Ferner erfolgt eine Entnahme über einen mittels eines Stellventils 30 einstellbaren dritten Teilstroms MD₃ als Prozeßdampf PD. Der Abdampf MD' der Mitteldruck-Teilturbine 4 wird über eine Überströmklappe 32 der Niederdruck-Teilturbine 6 zugeführt.

Aus der Niederdruck-Teilturbine 6 erfolgt ebenfalls eine Dampfentnahme für die Niederdruck-Vorwärmstraße 24 und für den Heizkondensator 28. Dazu wird ein erster Teilstrom ND₁ direkt und ein zweiter Teilstrom ND₂ über ein Stellventil 34 der Niederdruck-Vorwärmstraße 24 zugeführt. Ebenso wird dem Heizkondensator 28 ein dritter Teilstrom ND₃ direkt und ein vierter Teilstrom ND₄ über ein Stellventil 36 zugeführt. Der Abdampf ND' aus der Niederdruck-Teilturbine 6 kondensiert in einem Kondensator 40.

Das Hauptkondensat K wird aus dem Hotwell 42 des Kondensators 40 mittels einer Kondensatpumpe 44 über die Niederdruck-Vorwärmstraße 24 in den Speisewasserbehälter 18 gefördert. Aus dem Speisewasserbehälter 18 wird mittels einer Speisewasserpumpe 46 Speisewasser S über die Hochdruck-Vorwärmstraße 14 gefördert. Nebenkondensat NK₁ aus der Hochdruck-Vorwärmstraße 14 wird über eine Nebenkondensatpumpe 48 in den Speisewasserbehälter 18 gefördert. Ebenso wird Nebenkondensat NK₂ aus der Niederdruck-Vorwärmstraße 24 über eine Nebenkondensatpumpe 50 in den Kondensator 40, d.h. in dessen Hotwell 42 gefördert. Außerdem wird Nebenkondensat NK₃ aus dem Heizkondensator 28 mittels einer Nebenkondesatpumpe 52 in den Hotwell 42 des Kondensators 40 gefördert.

Während die Förderung des Hauptkondensats K und des Speisewassers S über eine Niveauregelung L_{K}/L_{SWB} erfolgt, wird die Förderung des Nebenkondensats NK_{1,2,3} über separate Niveauregelungen NKR₁, NKR₂ bzw. NKR₃ eingestellt. Diesen ist ein gemeinsamer Stellungs-Sollwert Y_{NKR} zuführbar. Ein über eine Kondensatpumpe 48 mit dem Hotwell 42 des Kondensators 40 verbundener Kaltkondensatspeicher 54 dient hierbei zur Ein- oder Ausspeicherung eines Teils des Hauptkondensats K.

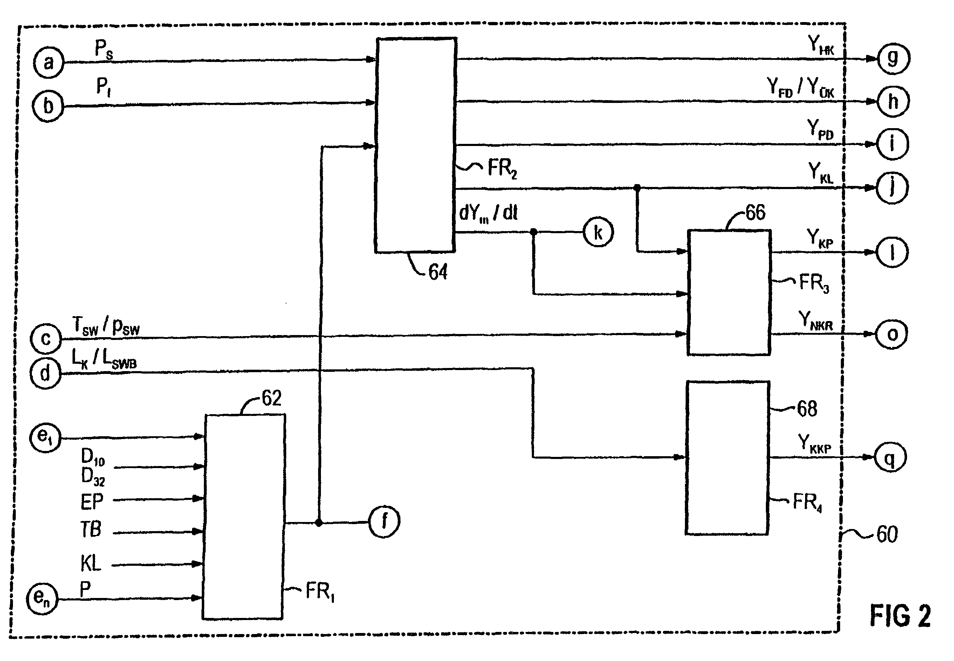

Die Vorrichtung zur schnellen Leistungsregelung ist in Figur 2 dargestellt. Sie umfaßt ein Fuzzy-System 60 mit vier Fuzzy-Reglern 62, 64, 66 und 68. Das Fuzzy-System 60 erhält als Eingangsgrößen einen frequenzkorrigierten Leistungs-Sollwert P_{S} sowie den Mehrleistungs-Istwert P_{I} des Generators 8. Der Mehrleistungs-Istwert P_{I} wird mittels einer Meßvorrichtung 70 am Generator 8 (Figur 1) gemessen. Weitere Eingangsgrößen des Fuzzy-Systems 60 sind die Temperatur T_{SW} und der Druck p_{SW} des Speisewassers S, die mittels einer Meßvorrichtung 72 im Speisewasserbehälter 18 (Figur 1) gemessen werden. Ferner werden dem Fuzzy-System 60 als Eingangsgröße das im Hotwell 42 des Kondensators 40 gemessene Kondensat-Niveau L_{K} und das im Speisewasserbehälter 18 gemessene Speisewasser-Niveau L_{SWB} zugeführt. Als weitere Eingangsgrößen eₗ...eₙ werden dem Fuzzy-System 60 Informationen über die Drosselgrade D₁₀, D₃₂ des Frischdampfstellventils 10 bzw. der Überströmklappe 32 und Daten über Einsatzprioritäten EP, technische Bereitschaft TB und Kannlast KL des Kraftwerks sowie weitere Prozeßgrößen P zugeführt.

Die Eingänge eₗ...eₙ gehören zu dem ersten Fuzzy-Regler 62 des Fuzzy-Systems 60. Sie berücksichtigen die für den zu regelnden Prozeßabschnitt relevanten Prozeßgrößen D₁₀, D₃₂, EP, TB, KL und P. Anhand von im ersten Fuzzy-Regler 62 hinterlegten Fuzzy-Regeln FR₁ aus Anlagenerfahrungen (Expertenwissen) wird eine Einsatzstrategie der zur schnellen Leistungsregelung des Kraftwerksblocks erforderlichen Maßnahmen ermittelt. Desweiteren werden dort temporäre Begrenzungen von im Prozeßabschnitt zu aktivierenden Energiespeichern ermittelt. Diese Einsatzstrategie, d.h. die Staffelung der Maßnahmen und Begrenzungen bilden die Ausgangsgröße f des ersten Fuzzy-Reglers 62.

Diese Ausgangsgröße f ist gleichzeitig Eingangsgröße des zweiten Fuzzy-Reglers 64. Weitere Eingangsgrößen a und b des zweiten Fuzzy-Reglers 64 sind der frequenzkorrigierte Leistungs-Sollwert P_{S} bzw. der Mehrleistungs-Istwert P_{I}. Im zweiten Fuzzy-Regler 64 werden aus diesen Eingangsgrößen a, b und f anhand von Fuzzy-Regeln FR₂ Ausgangsgrößen g bis k ermittelt. Während die Ausgangsgrößen g bis j Stellungs-Sollwerte sind, ist die Ausgangsgröße k eine abgeschätzte Klappenänderungsgeschwindigkeit dYₘ/dt des oder jedes im Prozeßabschnitt gemäß Figur 1 vorgesehenen Stellorgans 10, 12, 16, 22, 26, 32, 34 und 36. Die Ausgangsgröße g des zweiten Fuzzy-Reglers 64 gibt Stellungs-Sollwerte Y_{HK} für die Heizkondensat-Stellventile 26 und 36 an. Die Ausgangsgröße h gibt Stellungs-Sollwerte Y_{FD}, Y_{0K} für das Frischdampf-Stellventil 10 bzw. die Überströmklappe 32 an. Die Ausgangsgröße i gibt einen Stellungs-Sollwert Y_{PD} für das Stellventils 30 an, das die Menge des pro Zeiteinheit auszukoppelnden Prozeßdampfes PD einstellt. Die Ausgangsgröße j gibt Stellungs-Sollwerte Y_{KL} für die Anzapfdampf-Stellventile 12, 16, 22 und 34 an.

Die Ausgangsgrößen j und k des zweiten Fuzzy-Reglers 64 sind gleichzeitig Eingangsgrößen des dritten Fuzzy-Reglers 66. Als weitere Eingangsgröße c werden dem dritten Fuzzy-Regler 66 die Temperatur T_{SW} und der Druck p_{SW} des Speisewassers S im Speisewasserbehälter 18 zugeführt. Aus diesen Eingangsgrößen j, k und c werden anhand von Fuzzy-Regeln FR₃ als Ausgangsgrößen 1 und o Stellungs-Sollwerte Y_{KP}, Y_{NKR} für die Kondensat- bzw. Nebenkondensatregelung NKR_{1,2,3} gebildet.

Im vierten Fuzzy-Regler 68 des Fuzzy-Systems 60 wird als Ausgangsgröße q ein Stellungs-Sollwert Y_{KKP} für die Menge des in den Kaltkondensatspeicher 54 einzuspeichernden oder aus diesem auszuspeichernden Kondensats K gebildet. Dazu wird dem Fuzzy-Regler 68 als Eingangsgröße d das Kondensat- und Speisewasser-Niveau L_{K} bzw. L_{SWB} zugeführt. Die Bildung des Stellungs-Sollwertes Y_{KKP} erfolgt ebenfalls anhand von Fuzzy-Regeln FR₄.

Durch die in dem Fuzzy-System 60 verwendeten verfahrenstechnischen Kenntnisse wird sowohl eine schonende Fahrweise der Kraftwerksanlage oder des Kraftwerkblocks bei schnellen Leistungsänderungen als auch eine besonders effektive Ausnutzung der vorhandenen Energiespeicher gewährleistet. Die verfahrenstechnischen Kenntnisse fließen dabei in die Fuzzy-Regeln FR₁ bis FR₄ der einzelnen Fuzzy-Regler 62 bis 68 ein. Insbesondere wird zur Realisierung der Fuzzy-Regeln FR₁ des ersten Fuzzy-Reglers 62 die Priorität der Inanspruchnahme der einzelnen Energiespeicher berücksichtigt. Eine Aktivierung der Energiespeicher erfolgt durch eine Drosselung der Dampfzufuhr zu den Vorwärmstraßen 14 und 24 und/oder einer Drosselung des Prozeßdampfes PD sowie einer Drosselung des Kondensats K und/oder des Nebenkondensats NK_{1,2,3}. Die Bildung von entsprechenden Stellungs-Sollwerten Y für die Stell- oder Regelventile in den Turbinenanzapfungen und für die Kondensatregelung erfolgt dabei im Hinblick auf die Einstellung einer geforderten Generator-Mehrleistung P_{S}.

## Patentansprüche

1. Verfahren zur schnellen Leistungsregelung einer Kraftwerksanlage mit einem eine Dampfturbine (2, 4, 6) und einen Generator (8) aufweisenden Turbosatz, wobei zur Einstellung einer Generator-Mehrleistung (P_{S}) im Anlagenprozeß vorhandene Energiespeicher aktiviert werden,
**dadurch gekennzeichnet, daß** zur geregelten Aktivierung der Energiespeicher Fuzzy-Logik eingesetzt wird, wobei Fuzzy-Regeln (FR_{1...4}) aus den Anlagenerfahrungen verwendet werden, und wobei anhand der Generator-Mehrleistung (P_{S}) und anhand der Energiesituation der aktivierbaren Speicher der Aktivierungsgrad der einzelnen Energiespeicher ermittelt wird.

2. Verfahren nach Anspruch 1,
**dadurch gekennzeichnet, daß** zur Realisierung der Fuzzy-Regeln (FR₁) die Priorität (EP) der Inanspruchnahme der einzelnen Energiespeicher berücksichtigt wird.

3. Verfahren nach Anspruch 1 oder 2,
**dadurch gekennzeichnet, daß** zur Ermittlung von Stellungs-Sollwerten (Y) für die einzelnen Energiespeicher Informationen (TB) über deren Bereitschaft berücksichtigt werden.

4. Vorrichtung zur schnellen Leistungsregelung einer Kraftwerksanlage mit einem eine Dampfturbine und (2, 4, 6) und einen Generator (8) aufweisenden Turbosatz, wobei zur Einstellung einer Generator-Mehrleistung (P_{S}) im Anlagenprozeß vorhandene Energiespeicher aktivierbar sind,
**gekennzeichnet durch** ein Fuzzy-System (60), dessen Eingänge (a bis e) die Generator-Mehrleistung (P_{S}) sowie die Energiesituation der aktivierbaren Speicher beinhalten, und dessen Ausgänge (g bis j, l, o, q) den Aktivierungsgrad der einzelnen Energiespeicher angeben.

5. Vorrichtung nach Anspruch 4,
**dadurch gekennzeichnet, daß** das Fuzzy-System (60) einen ersten Fuzzy-Regler (62) umfaßt, dessen Eingänge (eₗ...eₙ) die Energiesituation der aktivierbaren Speicher beinhalten, und dessen Ausgang (f) eine Einsatzstrategie für durchzuführende Maßnahmen sowie für temporäre Begrenzungen des oder jedes aktivierbaren Speichers angibt.

6. Vorrichtung nach Anspruch 5,
**dadurch gekennzeichnet, daß** der erste Fuzzy-Regler (62) einen Eingang (e) für den Drosselgrad (D_{FD}, D_{0K}) mindestens eines mit der Dampfturbine (2, 4, 6) zuströmseitig verbundenen Stellorgans (10, 32) aufweist.

7. Vorrichtung nach einem der Ansprüche 4 bis 6,
**gekennzeichnet durch** einen zweiten Fuzzy-Regler (64), dessen Eingänge (a, b, f) den Leistungs-Sollwert (P_{S}) und einen Mehrleistungs-Istwert (P_{I}) des Generators (8) sowie die Einsatzstrategie und die Begrenzungen beinhalten, und dessen Ausgänge (g bis k) Stellungs-Sollwerte (Y) für Stellorgane (10, 12, 16, 22, 26, 30, 32, 34, 36) angeben.

8. Vorrichtung nach einem der Ansprüche 4 bis 7,
**gekennzeichnet durch** einen dritten Fuzzy-Regler (66), dessen Eingänge (c, j, k) den Stellungs-Sollwert (Y_{KL}) mindestens eines Anzapfdampf-Stellorgans (12, 16, 22, 34) und den Temperatur-Istwert (T_{SW}) und/oder Druck-Istwert (p_{SW}) von gespeichertem Speisewasser (S) beinhalten, und dessen Ausgänge (l, o) Steliungs-Sollwerte (Y_{KP}, Y_{NKR}) für Kondensat-Stellorgane (44, 48, 50, 52) angeben.

9. Vorrichtung nach Anspruch 8,
**dadurch gekennzeichnet, daß** ein Eingang (k) des dritten Fuzzy-Reglers (66) einen Wert für die Klappenänderungsgeschwindigkeit (dYₘ/dt) mindestens eines Stellorgans beinhaltet.

10. Vorrichtung nach einem der Ansprüche 4 bis 9,
**gekennzeichnet durch** einen vierten Fuzzy-Regler (68), dessen Eingang (d) einen Wert (L_{K}, L_{SWB}) für das Niveau in mindestens einem Zwischenspeicher (18, 42) beinhaltet, und dessen Ausgang (q) einen Stellungs-Sollwert (Y_{KKP}) für die Ein- oder Ausspeicherung von Kondensat K in einen Kondensatspeicher (54) angibt.

## Claims

1. Method for quickly controlling the output of a power station facility which has a turbo-generator set having a steam turbine (2, 4, 6) and a generator (8), energy stores present during the facility process being activated in order to set an additional generator output (P_{S}), **characterized in that** fuzzy logic is used for the controlled activation of the energy stores, fuzzy-logic rules (FR_{1...4}) from experience at the facility being used, and the additional generator output (P_{S}) and the energy situation of the activatable stores being used to determine the degree of activation of the individual energy stores.

2. Method according to Claim 1, **characterized in that** the priority (EP) of the use of the individual energy stores is taken into account in implementing the fuzzy-logic rules (FR₁).

3. Method according to Claim 1 or 2, **characterized in that** in order to determine desired setting values (Y) for the individual energy stores, information (TB) concerning their readiness is taken into account.

4. Apparatus for quickly controlling the output of a power station facility which has a turbo-generator set having a steam turbine (2, 4, 6) and a generator (8), energy stores present during the facility process being activatable in order to set an additional generator ouput (P_{S}), **characterized by** a fuzzy-logic system (60) whose inputs (a to e) include the additional generator output (P_{S}) and the energy situation of the activatable stores, and whose outputs (g to j, l, o, q) specify the degree of activation of the individual energy stores.

5. Apparatus according to Claim 4, **characterized in that** the fuzzy-logic system (60) comprises a first fuzzy-logic controller (62) whose inputs (eₗ...eₙ) include the energy situation of the activatable stores, and whose output (f) specifies a strategy of use for measures to be carried out as well as for temporary restrictions of the or of each activatable store.

6. Apparatus according to Claim 5, **characterized in that** the first fuzzy-logic controller (62) has an input (e) for the degree of throttling (D_{FD}, D_{UK}) of at least one control element (10, 32) connected to the steam turbine (2, 4, 6) on the inlet side.

7. Apparatus according to one of Claims 4 to 6, **characterized by** a second fuzzy-logic controller (64) whose inputs (a, b, f) include the desired output value (P_{S}) and an actual additional output value (P_{I}) of the generator (8) as well as the strategy of use and the restrictions, and whose outputs (g to k) specify desired setting values (Y) for control elements (10, 12, 16, 22, 26, 30, 32, 34, 36).

8. Apparatus according to one of Claims 4 to 7, **characterized by** a third fuzzy-logic controller (66), whose inputs (c, j, k) include the desired setting value (Y_{KL}) of at least one extraction steam control element (12, 16, 22, 34) and the actual temperature value (T_{SW}) and/or actual pressure value (p_{SW}) of stored feedwater (S), and whose outputs (l, o) specify desired setting values (Y_{KP}, Y_{NKR}) for condensate control elements (44, 48, 50, 52).

9. Apparatus according to Claim 8, **characterized in that** one input (k) of the third fuzzy-logic controller (66) includes a value for the damper response (dYₘ/dt) of at least one control element.

10. Apparatus according to one of Claims 4 to 9, **characterized by** a fourth fuzzy-logic controller (68) whose input (d) includes a value (L_{K}, L_{SWB}) for the level in at least one intermediate store (18, 42), and whose output (q) specifies a desired setting value (Y_{KKP}) for entering condensate K into, or extracting it from, a condensate store (54).

## Revendications

1. Procédé pour la régulation rapide de puissance d'une centrale électrique, comprenant un turbogénérateur comportant une turbine à vapeur (2, 4, 6) et une génératrice (8), des sources d'énergie présentes dans le processus de centrale étant activées pour établir une puissance supplémentaire de la génératrice (P_{S}),
**caractérisé par le fait qu'**on utilise la logique floue pour l'activation régulée des sources d'énergie, des règles floues (FR_{1...4}) issues de l'expérience acquise sur la centrale étant utilisées et le degré d'activation des sources d'énergie individuelles étant déterminé à l'aide de la puissance supplémentaire de la génératrice (P_{S}) et à l'aide de la situation énergétique des sources d'énergie activables.

2. Procédé selon la revendication 1,
**caractérisé par le fait que**, pour la réalisation des règles floues (FR₁), on prend en compte la priorité (EP) de la mise à contribution des sources d'énergie individuelles.

3. Procédé selon la revendication 1 ou 2,
**caractérisé par le fait que**, pour la détermination de valeurs de consigne de position (Y) pour les sources d'énergie individuelles, on prend en compte des informations (TB) sur leur disponibilité.

4. Dispositif pour la régulation rapide de puissance d'une centrale électrique, comprenant un turbogénérateur comportant une turbine à vapeur (2, 4, 6) et une génératrice (8), des sources d'énergie présentes dans le processus de centrale étant activées pour établir une puissance supplémentaire de la génératrice (P_{S}),
**caractérisé par** un système flou (60) dont les entrées (a à e) contiennent la puissance supplémentaire de génératrice (P_{S}) ainsi que la situation énergétique des sources d'énergie activables et dont les sorties (g à j, l, o, q) indiquent le degré d'activation des sources d'énergie individuelles.

5. Dispositif selon la revendication 4,
**caractérisé par le fait que** le système flou (60) comprend un premier régulateur flou (62) dont les entrées (e₁ à eₙ) contiennent la situation énergétique des sources d'énergie et dont la sortie (f) indique une stratégie d'utilisation pour des mesures à mettre en oeuvre ainsi que pour des limitations temporaires du ou de chaque source d'énergie activable.

6. Dispositif selon la revendication 5,
**caractérisé par le fait que** le premier régulateur flou (62) comporte une entrée (e) pour le degré d'étranglement (D_{FD}, D_{ÜK}) d'au moins un organe de réglage (10, 32) relié côté admission à la turbine à vapeur (2, 4, 6).

7. Dispositif selon l'une des revendications 4 à 6,
**caractérisé par** un deuxième régulateur flou (64) dont les entrées (a, b, f) ont la valeur de consigne de puissance (P_{S}) et une valeur réelle de la puissance supplémentaire (P_{I}) de la génératrice (8) ainsi que la stratégie d'utilisation et les limitations et dont les sorties (g à k) indiquent des valeurs de consigne de position (Y) pour des organes de réglage (10, 12, 16, 22, 26, 30, 32, 34, 36).

8. Dispositif selon l'une des revendications 4 à 7,
**caractérisé par** un troisième régulateur flou (66) dont les entrées (c, j, k) ont la valeur de consigne de position (Y_{KL}) d'au moins un organe de réglage de vapeur soutirée (12, 16, 22, 34) et la valeur réelle de température (T_{SW}) et/ou la valeur réelle de pression (p_{SW}) d'eau d'alimentation (S) stockée et dont les sorties (I, o) indiquent des valeurs de consigne de position (Y_{KP}, Y_{NKR}) pour des organes de réglage de condensat (44, 48, 50, 52).

9. Dispositif selon la revendication 8,
**caractérisé par le fait qu'**une entrée (k) du troisième régulateur flou (66) a une valeur pour la vitesse de variation de clapet (dYₘ/dt) d'au moins un organe de réglage.

10. Dispositif selon l'une des revendications 4 à 9,
**caractérisé par** un quatrième régulateur flou (68) dont l'entrée (d) a une valeur (L_{K}, L_{SWB}) pour le niveau dans au moins un réservoir intermédiaire (18, 42) et dont la sortie (q) a une valeur de consigne de position (Y_{KKP}) pour le stockage ou le retrait de condensat K dans une source de condensat (54).
